# EUROPÄISCHE PATENTSCHRIFT

(11) **EP 1 728 485 B1**
(45) Veröffentlichungstag und Bekanntmachung des Hinweises auf die Patenterteilung: **17.03.2010**
(21) Anmeldenummer: 06114810.2
(22) Anmeldetag: 01.06.2006
(51) Int. Cl.: A61C 7/14, A61C 7/00

(54) **Verfahren zur Herstellung eines orthodontischen Brackets und einer Positionierhilfe für das Bracket**
Method of manufacturing an orthodontic bracket and placement jig for the bracket
Procédé de fabrication d'un bracket orthodontique et dispositif de positionnement du bracket orthodontique

(30) Priorität: 01.06.2005 DE 102005025557
(43) Veröffentlichungstag der Anmeldung: 06.12.2006
(73) Patentinhaber: Sirona Dental Systems GmbH, 64625 Bensheim (DE)
(72) Erfinder: Fornoff, Peter, 64385, Reichelsheim 3 (DE)
(74) Vertreter: Sommer, Peter

(56) Entgegenhaltungen:
- DE-A1- 19 627 311
- US-A- 5 827 058
- US-A- 6 015 289
- US-A1- 2004 219 471

## Beschreibung

### Technisches Gebiet

Die Erfindung betrifft ein Verfahren zur Herstellung eines orthodontischen Brackets und einer Positionierhilfe für des Bracket.

### Stand der Technik

Aus der DE 693 27 661 T2 und der US-A-6,015,289 ist bekannt, ein orthodontisches Bracket herzustellen, in dem in einen Bracketrohling ein Schlitz für einen Bogendraht gefräst wird. Das Fräsen des Schlitzes erfolgt entsprechend der individuellen Anforderungen nach einer entsprechenden Berechnung mit einem Programm. Darüber hinaus wird in ein individuell für jeden Zahn konstruierter Halter für das individuell konstruierte Bracket aus runden Kunststoffscheiben hergestellt. Dabei wird der Fräserradius des Bearbeitungswerkzeugs berücksichtigt.

Nachteiligerweise muss dafür Sorge getragen werden, dass die Zuordnung von individuellem Halter und individuellem Bracket nicht verloren geht, was auf den Transportwegen und anschließend bei der Anbringung eine große Sorgfalt erfordert.

Die US 4,284,405 offenbart eine Vorrichtung und ein Verfahren zur orthodontischen Behandlung, bei dem ein Modell der Zahnsituation geschaffen wird und dann zur Positionierung des orthodontischen Apparats eine plattenartige Fixierung auf das Zahnmodell aufgeformt wird.

Die US 2004/0219473 A1 stellt eine orthodontische Vorrichtung vor, die mit Hilfe einer Replika der Zahnoberfläche auf dem Zahn positioniert wird. Die Replika wird mit Hilfe eines Zahnabdrucks hergestellt.

Die US 2003/0194677 A1 stellt ein Verfahren und ein Gerät zur Erzeugung einer orthodontischen Schablone vor, die zur Unterstützung der Positionierung eines orthodontischen Geräts dient. Die Schablone wird auf der Grundlage eines Datensatzes der Zahnsituation des Patienten rechentechnisch konstruiert und durch Schleifen, 3D-Drucken und/oder Formung aus einer Schmelze erzeugt.

Nachteilig bei den drei letztgenannten orthodontischen Verfahren und Vorrichtungen ist, dass die orthodontische Befestigungsvorrichtungen eine standardisierte Geometrie aufweisen, die nicht auf die Geometrie der Zahnoberfläche anpassbar sind. Zudem sind jeweils sehr viele Arbeitsschritte zur Realisierung der genannten Verfahren nötig.

Ausgehend von den bekannten Verfahren und Vorrichtungen entsteht der Wunsch nach einer einfachen und kostengünstig realisierbaren Lösung zur Erzeugung von exakt positionierbaren orthodontischen Vorrichtungen, die auf der Grundlage einer CAD/CAM-Behandlungsplanung in marktüblichen und erprobten automatischen Schleifmaschinen hergestellt werden können.

### Offenbarung der Erfindung

Es ist ein Träger vorgesehen, welcher einen Halteabschnitt zur Befestigung in einer Aufnahme einer Bearbeitungsmaschine aufweist und ein Trägerteil für ein Befestigungselement umfasst. Das Befestigungselement ist zumindest teilweise in das Trägerteil eingebettet, wobei die Befestigungsfläche des Befestigungselements bearbeitbar ist. Der Träger kann in eine Bearbeitungsmaschine eingespannt und bearbeitet werden und dabei die Befestigungsfläche des Befestigungselements individualisiert werden.

Das Befestigungselement ist ein im Bereich der Kieferorthopädie verwendetes Bracket mit einer bereits ausgebildeten oder noch auszubildenden vorderen Haltevorrichtung für ein zu befestigendes weiteres Element und einer rückwärtigen Befestigungsfläche zur Befestigung an einem Zahn.

Das Befestigungselement ist in einem Seitenbereich zwischen der Vorderseite und der Rückseite des Befestigungselements mit dem Trägerteil verbunden. Dies ermöglicht eine gute Zugänglichkeit der Werkzeuge der Bearbeitungsmaschine zu dem Befestigungselement.

Vorteilhafterweise ist die Verbindung als formschlüssige Verbindung ausgebildet, wobei insbesondere eine Rastverbindung zu bevorzugen ist. Eine derartige Rastverbindung ist bei passender Ausgestaltung ohne Weiteres lösbar.

Vorteilhafterweise sind an dem Träger mindestens zwei zueinander beabstandete Befestigungselemente vorgesehen. Üblicherweise ist das bearbeitbare Volumen der in Frage kommenden Bearbeitungsmaschinen wesentlich größer als die Grö-βe der Befestigungselemente, so dass dann, insbesondere, wenn die Befestigungselemente orthodontische Brackets sind, eine effiziente Herstellung mehrer Brackets in einem Arbeitsgang möglich ist. Bei orthodontischen Behandlungen werden in der Regel eine Vielzahl von Brackets gleichzeitig benötigt. Das Anbringen mehrerer Befestigungsvorrichtungen auf einem Träger ist daher besonders ökonomisch.

Vorteilhafterweise sind die Befestigungselemente entlang einer Längsachse des Trägerteils angeordnet. Dies erleichtert die Bearbeitung in der Bearbeitungsmaschine.

Vorteilhafterweise weist das Trägerteil mindestens zwei um die Längsachse herum angeordnete Teilabschnitte auf. Damit ist es möglich, bei nahezu gleichem Platzbedarf die Anzahl der in einem Arbeitsgang herstellbaren Befestigungsvorrichtungen zu verdoppeln.

Vorteilhafterweise sind mindestens zwei Teilabschnitte stofflich miteinander verbunden und vorzugsweise in einem Winkel von 75° bis 90° zueinander ausgerichtet. Dann sind beide Teilabschnitte besonders gut von der Bearbeitungsmaschine erreichbar.

Besonders vorteilhaft ist es, wenn die Befestigungselemente entlang einer Längsachse versetzt zueinander an den Teilabschnitten angeordnet sind. Dies ermöglicht einen schnelleren Herstellungsablauf.

Gemäß der Erfindung ist die Befestigungsfläche des Befestigungselements vollständig in das Trägerteil eingebettet. Ein derartiger Träger lässt sich besonders kostengünstig herstellen.

Vorteilhafterweise steht das Befestigungselement mit einem Halteelement für ein Spannelement über das Trägerteil hervor. Dies erleichtert das spätere Greifen und Positionieren des Halteelements auf der Zahnoberfläche.

Vorteilhafterweise ist das Material des Befestigungselements und das Material des Trägerteils derart unterschiedlich, dass ein Kleber zur Befestigung des Befestigungselements an einem Zahn nur eine Klebeverbindung mit dem Befestigungselement herstellt. Dadurch wird verhindert, dass das Trägerteil auf dem Zahn mit festgeklebt wird, wodurch sich eine besonders gute Handhabbarkeit des Trägerteils mit Befestigungselement erreichen lässt.

In einer besonders vorteilhaften Ausgestaltung besteht das Befestigungselement aus Metall und das Trägerteil aus einem polymeren Material. Ein Befestigungselement aus Metall weist eine ausreichende Festigkeit zum Einsatz in orthodontischen Behandlungen auf und ist bei entsprechender Materialwahl biokompatibel.

Alternativ ist es möglich, das Befestigungselement aus Keramik auszubilden. Keramik hat besonders gute ästhetische Eigenschaften, da es möglich ist, die Keramik farblich an den Zahn anzupassen.

Vorteilhafterweise ist das Trägerteil aus PTFE (Polytetrafluorethylen). PTFE, welches häufig auch Teflon bezeichnet wird, ist in Bearbeitungsmaschinen gut bearbeitbar und geht mit vielen Klebstoffen keine haftende Verbindung ein.

Vorteilhafterweise ist die Haltevorrichtung des Befestigungselements bezüglich ihrer Wirkungsrichtung für das zu befestigende weitere Element noch gestaltbar. Dies ermöglicht den Einsatz von geraden, ungeformten Drähten (Straight-Wire-Technology), wodurch das Biegen von Drähten zur definierten Erzeugung von Kräften an den einzelnen Zähne überflüssig oder stark vereinfacht wird.

Vorteilhafterweise ist benachbart zur Befestigungsfläche des Befestigungselements eine Sollbruchstelle im Trägerteil vorgesehen. Dies erleichtert die Entfernung des Trägerteils bei der Befestigung des Befestigungselements auf dem Zahn.

Vorteilhafterweise ist das Trägerteil spritztechnisch hergestellt und das Befestigungselement als Einlegeteil in das Trägerteil eingebettet. Ein derartiges Trägerteil ist besonders preiswert herstellbar.

Als besonders vorteilhaft erweist es sich, wenn auf dem Träger mindestens vierzehn Befestigungselemente vorgesehen sind, die vorzugsweise unterschiedlich gestaltet sind. Bei einer orthodontischen Behandlung werden pro Kiefer üblicherweise mindestens vierzehn Befestigungsvorrichtungen benötigt. Abhängig vom Einsatzort werden Ansprüche an die Befestigungselemente gestellt, die sich in einer unterschiedlichen Ausgestaltung der Befestigungselemente wiederspiegeln.

Der Gegenstand der Erfindung betrifft ein Befestigungselement mit einer Befestigungsfläche, wobei die Befestigungsfläche von einer Positionierhilfe umgeben ist. Die Befestigungsfläche und die Positionierhilfe sind in einem bearbeiteten Zustand individuell geformt und weisen zumindestens ausschnittsweise die Form der Oberfläche auf, an dem Befestigungselement zu befestigen ist. Ein derart individuell hergestelltes Befestigungselement lässt sich einerseits so formen, dass es möglich ist, das Befestigungselement mit der Befestigungsfläche mittels einer gleichmäßig dicken Klebstoffschicht auf dem Zahn zu befestigen und die andererseits räumliche Ausrichtung des Befestigungselements in vielen Parametern zu variieren (Ausrichtung der vorderen Haltevorrichtung, Abstand der vorderen Haltevorrichtung vom Zahn etc.).

Vorteilhafterweise ist die Befestigungsfläche in einem unbearbeiteten Zustand von der Positionierhilfe überdeckt.

Damit ist es möglich, die Positionierhilfe der natürlichen Wölbung des Zahns entsprechend zu formen.

Die Befestigungsfläche des Befestigungselements ist in einem bearbeiteten Zustand nicht von der Positionierhilfe überdeckt. Dies ermöglicht die Befestigung des Befestigungselements an der Zahnoberfläche.

Vorteilhafterweise weist die Positionierhilfe eine Sollbruchstelle auf. Die Positionierhilfe ist somit nach der Positionierung des Befestigungselements leicht vom Zahn zu entfernen.

Alternativ ist es möglich, die Positionierhilfe mittels einer lösbaren Verbindung an dem Befestigungselement zu befestigen. Die lösbare Verbindung kann vorteilhafterweise eine Rastverbindung sein.

Von besonderem Vorteil erweist es sich, wenn die Befestigungsfläche gegenüber der Positionierhilfe um einen Versatz von der Oberfläche, an dem das Befestigungselement befestigt werden soll, zurückversetzt ist. Dies lässt Raum für das Aufbringen eines geeigneten Klebers, wobei der Versatz entsprechend der gewünschten Dicke des Klebers gewählt wird.

Bei einem Verfahren zur Herstellung eines zu bearbeitenden Befestigungselements zur Befestigung an einer individuellen Oberfläche, insbesondere im Bereich der Kieferorthopädie als orthodontisches Bracket, wird anhand von Oberflächendaten der Oberfläche, an der das Befestigungselement zu befestigen ist, die Kontur der Befestigungsfläche festgelegt und ein vorgeformtes, noch nicht individualisiertes Befestigungselement materialabtragend bearbeitet und die festgelegte Kontur hergestellt. Weiterhin wird eine Positionierhilfe mit einer Kontur versehen, welche die Kontur der Befestigungsfläche fortsetzt und ebenfalls anhand der Oberfläche festgelegt ist, an welcher das Befestigungselement zu befestigen ist.

Diese Bearbeitung kann insbesondere in einer zur Bearbeitung von Dentalkeramik geeigneten Schleifmaschine erfolgen.

Vorteilhafterweise ist das Befestigungselement auf der der Befestigungsfläche abgewandten Seite mit einem noch nicht individualisierten Halteelement für ein zu haltendes Bauteil versehen, wobei das Halteelement unter Berücksichtigung des zu haltenden Bauteils bezüglich der individuellen Oberfläche bearbeitet wird. Damit ist es möglich, das Befestigungselement so zu gestalten, dass ein gerader Draht verwendet werden kann. Die Festlegung der Kräfte auf den einzelnen Zahn findet dann über die Position und die Ausrichtung des Befestigungselements und des Halteelements auf dem Zahn statt.

Vorteilhafterweise wird die Befestigungsfläche des Befestigungselements gegenüber der Kontur der Positionierhilfe um einen Versatz von der Oberfläche, an dem das Befestigenselement befestigt werden soll, zurückversetzt hergestellt. Damit wird eine Klebefuge geschaffen, die mit einer entsprechend der Tiefe des Versatzes dicken Klebeschicht gefüllt werden kann und das Befestigungselement mit sehr hoher Positioniergenauigkeit und definierter Dicke der Klebstoffschicht auf dem Zahn positioniert und befestigt werden kann.

### Kurze Beschreibung der Zeichnungen

Ausführungsbeispiele der Erfindung sind in der Zeichnung dargestellt. Es zeigt die
- Fig. 1: einen Träger mit mehreren Befestigungselementen in Form von Brackets, die
- Fig. 2: einen Teilschnitt entlang der Linie A-A aus Fig. 1, die
- Fig. 3: einen Schnitt entlang der Linie B-B aus Fig. 2, die
- Fig. 4: eine perspektivische Ansicht des Trägers mit einem Bearbeitungswerkzeug, die
- Fig. 5: eine Zahnreihe mit mehreren festgeklebten Brackets mit Positionierhilfe und die
- Fig. 6: ein Bracket mit einer Positionierhilfe an einem Zahn im Querschnitt, die
- Fig. 6A: eine Verrastung der Positionierhilfe am Bracket im Detail, die
- Fig. 7: das Bracket mit Positionierhilfe aus Fig. 6 ohne Zahn, die
- Fig. 8: die Zahnreihe aus Fig. 5 nach Entfernen der Positionierhilfe und Befestigen eines Spanndrahtes, die
- Fig. 9: die Anordnung der Brackets und der Positionierhilfe im Träger aus Fig. 1, die
- Fig. 10A: die Bearbeitung des Brackets zur Herstellung einer ersten Ausgestaltung einer Aufnahme für ein Spannelement und die
- Fig. 10B: die Bearbeitung des Brackets zur Herstellung einer zweiten Ausgestaltung einer Aufnahme für ein Spannelement.

### Ausführungsbeispiele

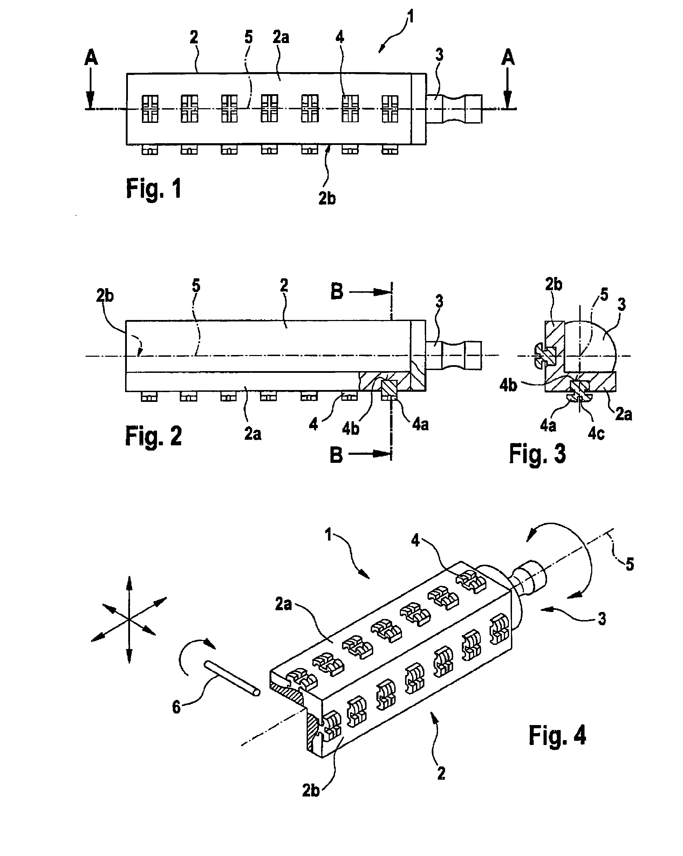

In **Fig. 1** ist ein Träger 1 dargestellt, der aus einem Trägerteil 2 und einem Halteabschnitt 3 zur Befestigung in einer nicht dargestellten Aufnahme einer nicht dargestellten Bearbeitungsmaschine aufweist. In dem Trägerteil 2 sind mehrere Befestigungselemente 4 angeordnet. Die Befestigungselemente 4 sind nebeneinanderliegend entlang einer Längsachse 5 des Trägers angeordnet.

In **Fig. 2** ist ein Schnitt entlang der Linie A-A aus Fig. 1 dargestellt. Das Befestigungselement 4 steht mit einem Teil über das Trägerteil 2 hervor. In Verbindung mit **Fig. 3** wird deutlich, dass das Trägerteil 2 aus zwei Teilabschnitten 2a, 2b besteht, die stofflich miteinander verbunden sind und in etwa einen Winkel von 90° einschließen. Sowohl der Teilabschnitt 2a als auch der Teilabschnitt 2b ist von seiner Rückseite, also der der Längsachse 5 zugewandten Seite her für eine Bearbeitung mit einem Bearbeitungswerkzeug zugänglich.

Weiterhin ist zu erkennen, dass eine vom Trägerteil 2 wegzeigende Seite des Befestigungselements 4 mit einem Halteelement 4a versehen ist und dass die gegenüberliegende Seite, eine Befestigungsfläche 4b, vollständig in das Trägerteil 2 eingebettet ist.

Das Halteelement 4a des Befestigungselements 4 ist bereits mit einer Nut 4c zur Aufnahme eines Spannelements (nicht dargestellt) versehen. Diese Ausnehmung 4c ist entweder in dem noch unbearbeiteten Träger 1 bereits enthalten oder wird in einem Bearbeitungsvorgang des Trägers 1 mittels eines geeigneten Bearbeitungswerkzeugs für das Befestigungselement entsprechend individuell entsprechend der Vorgaben erzeugt.

In **Fig. 4** ist der Träger 1 aus den Fig. 1 bis 3 perspektivisch dargestellt. Darüber hinaus ist ein stiftförmiges Bearbeitungswerkzeug 6 in Form eines Schleifers oder Fräsers gezeigt, welches mit einer Relativbewegung bezüglich der Raumachsen, dargestellt durch die Pfeile, bezüglich des Trägers 1 bewegbar ist. In der gezeigten Lage des Trägers 1 läßt sich mit dem Bearbeitungswerkzeug 6 die Innenseite des Teilabschnitts 2a bearbeiten, um eine vorgegebene Kontur herzustellen. Bei der materialabtragenden Bearbeitung wird das Trägerteil 2 im Bereich der Befestigungsfläche 4b soweit abgetragen, dass die Befestigungsfläche vollständig frei liegt und nicht mehr vom Material des Trägerteils 2 überdeckt ist. Es wird aber auch der der Befestigungsfläche 4b benachbarte Bereich des Trägerteils 2 bearbeitet, wobei die Kontur der Befestigungsfläche fortgesetzt wird.

Es ist zwar möglich, anhand der vorhandenen Oberflächendaten auch eine separate Positionierhilfe herzustellen und diese Positionierhilfe erst später an dem Befestigungselement anzubringen, die gleichzeitige Herstellung verhindert aber eine fehlerhafte Zuordnung der Positionierhilfe einerseits zu dem Befestigungselement andererseits.

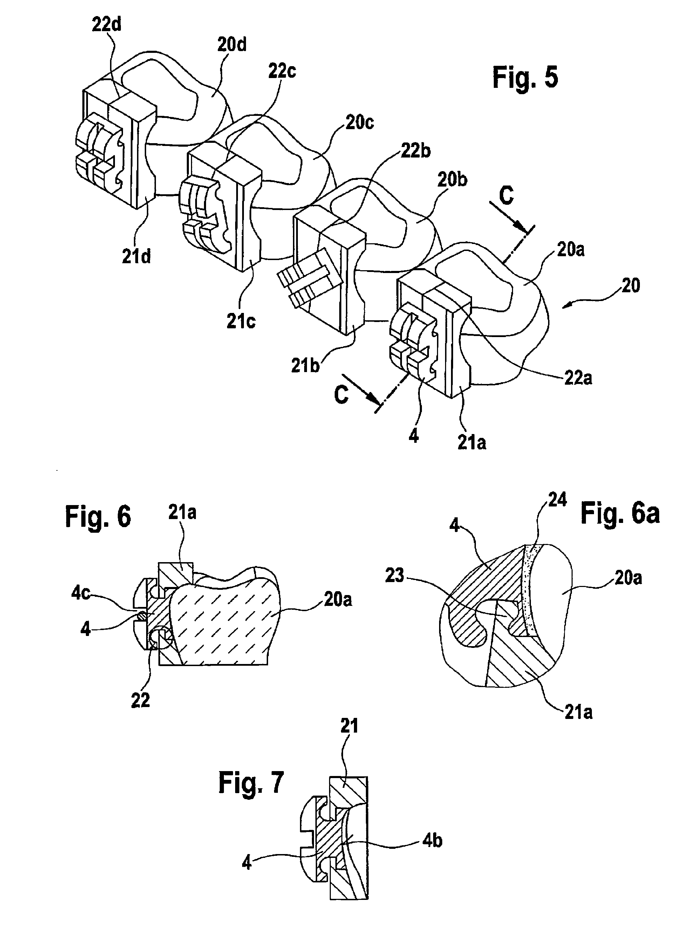

In **Fig. 5** ist eine Zahnreihe 20 aus den Zähnen 20 a bis d dargestellt, wobei an den Zähnen 20 a bis d das Bracket 4 zusammen mit dem als Positionierhilfe 21 ausgebildeten Umgebungsbereich den vormaligen Trägerteils 2 angebracht ist. Es ist ersichtlich, dass die Positionierhilfe 21a am Zahn 20a in etwa achsparallel zu dem Befestigungselement 4 orientiert ist, wohingegen die Positionierhilfe 21b am Zahn 20b relativ zu dem Befestigungselement 4 im Uhrzeigersinn verdreht ist. Am Zahn 20c ist eine Positionierhilfe 21c in entgegengesetzter Richtung gegenüber derjenigen an Zahn 20b verdreht, am Zahn 20d ist die Positionierhilfe 21d wieder in etwa achsparallel ausgerichtet.

Obwohl im Träger nach Fig. 1 die Befestigungselemente alle gleich ausgerichtet sind, lässt sich durch entsprechende Bearbeitung eine Positionierhilfe bereitstellen, welche in Bezug auf das Befestigungselement zu einer Schrägstellung des Befestigungselements führt. Dazu ist es erforderlich, dass die mehreren Befestigungselemente aus Fig. 1 einen ausreichend großen Abstand auf dem Trägerteil 2 zueinander aufweisen.

In **Fig. 6** ist ein Schnitt entlang der Linie C-C aus Fig. 5 gezeigt. An dem Zahn 20a ist das Befestigungselement 4 befestigt, entweder durch Kleben oder Zementieren. Die Orientierung des Befestigungselements 4 am Zahn 20a erfolgt mittels des Positionierhilfe 21a, die ihrerseits mit dem Befestigungselement 4 über eine Rastverbindung 23 in Verbindung steht. Bei der Befestigung des Befestigungselements 4 am Zahn 20a ist darauf zu achten, dass die Positionierhilfe 21a selbst nicht mit dem Zahn 20a verbunden wird. Ist die Positionierhilfe beispielsweise aus einem Material wie PTFE, so gehen die Klebstoffe bzw. Zemente zur Befestigung des Befestigungselements 4 mit der Positionierhilfe selbst keine Klebeverbindung ein.

Die Rastverbindung ist in Fig. 6a dargestellt und es ist zu erkennen, dass die Positionierhilfe 21a einen Rastvorsprung aufweist, welcher in eine Hinterschneidung am Befestigungselement 4 eingreift. Die Hinterschneidung ist darüber hinaus auch hilfreich beim Entfernen des aufgeklebten Befestigungselements 4 vom Zahn 20a.

Die Positionierhilfen 21a bis d sind mit Sollbruchstellen 22a bis d zur leichteren Entfernung der Positionierhilfen 21a bis d nach der Befestigung 4a bis d an den Zähnen 20 a bis d versehen

Obwohl in Fig. 6 eine Aufnahmenut 4c mit achsparallelem Verlauf dargestellt ist, kann die Nut auch in anderer Richtung verlaufen, wie dies bei der Herstellung von Brackets bereits bekannt und erforderlich ist, etwa um den Zahn 20a nach unten zu ziehen oder nach oben zu heben.

In **Fig. 7** ist der Verlauf der Befestigungsfläche 4b des Befestigungselements 4 erkennbar, wobei die Kontur der Befestigungsfläche 4b entsprechend der vorgegebenen Oberfläche des Zahns 20a angepasst ist, gegebenenfalls unter Berücksichtigung eines Korrekturwerts für das Verbindungsmittel, insbesondere Kleber oder Zement, vorgesehen sein kann. An die Befestigungsfläche 4b schließt sich seitlich die Positionierfläche der Positionierhilfe 21 an, deren Kontur an die Oberfläche des Zahns 20 angepasst ist. Die Berücksichtigung eines Spaltmaßes ist hier nicht erforderlich, da kein Verbindungsmittel wie Kleber oder Zement verwendet wird.

Der Verlauf eines Klebeschicht 24 ist in Fig. 6a gezeigt. Es kann darüber hinaus vorteilhaft sein, in der Positionierhilfe 21a noch Ausgleichsräume zur Aufnahme des überschüssigen Verbindungsmittels wie Kleber oder Zement vorzusehen (nicht dargestellt).

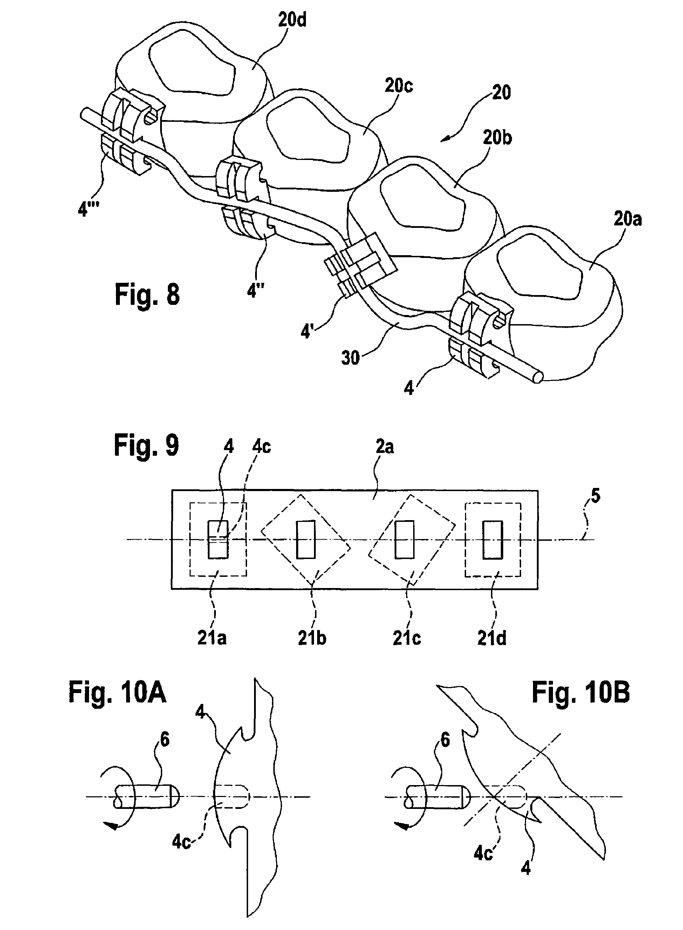

In **Fig. 8** ist die Zahnreihe 20 aus Fig. 5 dargestellt, nachdem ein Spannelement 30 in die Befestigungselemente 4 eingelegt wurde und die Positionierhilfe 21 entfernt wurde.

Das Spannelement 30 ist ein gerader Draht mit definierter Elastizität, der durch die Lage und Ausrichtung der Befestigungselemente 4, 4', 4", 4"' auf den Zähnen 20a - 20d und der Lage der Haltevorrichtungen 4c in einer gekrümmten Form eingespannt ist. Das Spannelement 30 übt durch seine Elastizität abhängig von seiner Krümmung auf jeden der Zähne 20a - 20d eine definierte translatorische und/oder rotatorische Kraft aus, die in einer gewünschten Bewegung des jeweiligen Zahnes 20a - 20d führt.

Das Entfernen der Positionierhilfe ist nach dem Aufkleben des Befestigungselements 4 leicht möglich, da es aus einem nicht adhäsiven Material, beispielsweise Teflon, besteht und durch die Rastverbindung und/oder die Sollbruchstelle einfach abgenommen werden kann. Übrig bleibt nur das exakt positonierte Befestigungselement 4 auf dem Zahn.

Die Positionierung des mit der Positionierhilfe 21 verbundenen Befestigungselements 4 am Zahn 20 erfolgt dergestalt, dass durch Bewegung am Zahn 20 entlang die Position gesucht wird, in der eine größtmögliche Überdeckung der äußeren Oberfläche des Zahns 20 mit der inneren Oberfläche des Befestigungselements 4 bzw. der Positionierhilfe 21 erreicht wird. Durch Anpressen des Befestigungselements 4 an den Zahn 20 wird eine Verbindung hergestellt, eventuell auch unter gleichzeitiger Einwirkung von Wärme und/oder Licht.

Ein Verrutschen des Befestigungselements 4 und der damit verbundenen Positionierhilfe 21 wird dadurch verhindert, dass nach dem Erreichen der passende Position eine sehr viel größere Auflagefläche zwischen dem Zahn 20 und der Positionierhilfe 21 besteht, wodurch eine erheblich größere Kraft zum Verschieben der Positionierhilfe 21 nötig wird.

Dadurch, dass die Befestigungsfläche 4b des Befestigungselements 4 gegenüber der Positionierfläche der Positionierhilfe 21 zurückversetzt ist und die Rastverbindung 23 ein gewisses Spiel zur Befestigungsfläche 4b hin ermöglicht, lässt sich das Befestigungselement 4 gegenüber der umgebenden Positionierhilfe 21 auf die Oberfläche des Zahns 20 hin um einen kleinen Betrag verschieben. Dabei erfolgt eine Führung des Befestigungselements 4 entlang der Seitenflächen zu der umgebenden Positionierhilfe 21.

Damit wird erreicht, dass zwischen dem Befestigungselement 4und der Fortsetzung der Oberfläche der Positionierhilfe 21 ein kleiner Versatz entsteht, der mit Kleber aufgefüllt wird und somit eine gleichmäßig dicke Kleberschicht entsteht.

Dadurch, dass das Befestigungselement 4 auf der Seite der Befestigungsfläche 4b vollständig in das Trägerteil eingebettet ist, werden Bearbeitungskräfte bei der Herstellung der Ausnehmung 4c ohne weiteres aufgenommen. Erst nach Herstellung der Aufnahme 4c erfolgt die Bearbeitung der Befestigungsfläche 4b und die Ausbildung der Positionierhilfe 21, die aus dem Trägerteil 2 herausgearbeitet wird.

In **Fig. 9** ist dargestellt, wie die Positionierhilfen 21a bis 21d aus Fig. 5 aus dem Trägerteil gemäß Fig. 1 hergestellt werden können.

In **Fig. 10** ist dargestellt, wie eine Ausnehmung 4c im Befestigungselement 4 hergestellt wird, die gerade oder schräg verläuft. Unter Bezugnahme auf Fig. 4 lässt sich dies durch Drehen des Trägers 1 um seine Längsachse 5 erreichen, die für den Fall, dass mehr als ein mit Befestigungselementen versehener Teilbereich des Trägerteils vorgesehen ist, vorhanden sein muss, damit das Bearbeitungswerkzeug 6 die Befestigungsflächen der Befestigungselemente auch erreichen kann.

Alternativ zu der in Fig. 9 dargestellten Platzierung des Befestigungselements 4 bezüglich der Positionierhilfe 21, die im wesentlichen durch den Verlauf der Ausnehmung 4c bestimmt ist, ist es auch denkbar, die Positionierhilfe 21 und das Befestigungselement 4 stets gleich zueinander zu platzieren und die Ausnehmung 4c auch in dem Verlauf entlang der Längsachse 5 durch Bearbeitung den gewünschten Verlauf zu geben.

## Patentansprüche

1. Herstellung eines im Bereich der Kieferorthopädie als orthodontisches Bracket verwendeten Befestigungselements (4) zur Befestigung an einer individuellen Oberfläche eines Zahns, wobei anhand von Oberflächendaten der Oberfläche, an der das Befestigungselement (4) zu befestigen ist, die Kontur der Befestigungsfläche (4b) individuell festgelegt wird und wobei ein vorgeformtes, noch nicht individualisiertes Befestigungselement (4) materialabtragend bearbeitet wird und wobei während der Bearbeitung die festgelegte individuelle Kontur hergestellt wird, wobei ein Träger (1) mit einem Trägerteil (2) in einem zu dem in das Trägerteil (2) eingebetteten Befestigungselement benachbarten Bereich zur Bereitstellung einer Positionierhilfe gememsam mir der Befestigungsfläche bearbeitet wird, wobei die Positionierhilfe (21) mit einer Kontur versehen wird, welche die Kontur der Befestigungsfläche (4b) seitlich fortsetzt und welche ebenfalls anhand der Oberfläche festgelegt ist, an welcher das Befestigungselement (4) zu befestigen ist und wobei anschließend die Positionierhilfe aus dem Trägerteil (2) des Trägers (1) herausgearbeitet wird.

2. Verfahren nach Anspruch 1, **dadurch gekennzeichnet, dass** das Befestigungselement (4) auf der der Befestigungsfläche (4b) abgewandten Seite mit einem noch nicht individualisierten Halteelement (4a) für ein zu haltendes Bauteil (30) versehen ist, wobei das Halteelement (4a) unter Berücksichtigung der Ausrichtung des zu haltenden Bauteils (30) bezüglich der individuellen Oberfläche bearbeitet wird.

3. Verfahren nach Anspruch 1 oder 2, **dadurch gekennzeichnet, dass** die Befestigungsfläche (4b) des Befestigungselements (4) gegenüber der Kontur der Positionierhilfe (21) um einen Versatz (t) von der Oberfläche, an dem das Befestigungselement befestigt werden soll, zurückversetzt hergestellt wird.

## Claims

1. A method for the production of an attachment element (4) used in the field of orthodontology as an orthodontic bracket for attachment to an individual surface of a tooth, wherein the contour of the attachment surface (4b) is individually defined on the basis of surface data of the surface to which said attachment element (4) is to be attached and wherein a preformed, uncustomized attachment element (4) is machined and the defined individual contour is produced during such machining, and a support (1) having a supporting member (2) is machined together with said attachment surface in a region adjacent to the attachment element embedded in said supporting member (2) for the purpose of providing a positioning aid, wherein said positioning aid (21) is provided with a contour which forms a lateral continuation of the contour of said attachment surface (4b) and which is likewise defined on the basis of the surface to which said attachment element (4) is to be attached and said positioning aid is then carved out of said supporting member (2) of said support (1).

2. The method as defined in claim 1, **characterized in that** said attachment element (4) is provided on that side thereof which is remote from said attachment surface (4b) with an uncustomized retaining element (4a) for a component (30) to be retained, wherein said retaining element (4a) is machined to allow for the alignment, with reference to said individual surface, of said component (30) to be retained.

3. The method as defined in claim 1 or claim 2, **characterized in that** said attachment surface (4b) of said attachment element (4) is produced offset from the contour of said positioning aid (21) by a distance (t) from the surface to which said attachment element is to be attached.

## Revendications

1. Fabrication d'un élément de fixation (4) utilisé en tant que bracket orthodontique dans le domaine de l'orthopédie maxillaire et destiné à être fixé à une surface individuelle d'une dent, dans laquelle à l'aide de données de surface de la surface à laquelle l'élément de fixation (4) doit être fixé, le contour de la surface de fixation (4b) est défini individuellement, et dans laquelle un élément de fixation (4) préformé, non encore personnalisé, est usiné par enlèvement de matière, et dans laquelle pendant l'usinage, le contour individuel défini est réalisé, dans laquelle un support (1) avec une partie de support (2) est usiné en même temps que la surface de fixation dans une zone adjacente à l'élément de fixation encastré dans la partie de support (2) en vue de fournir une aide au positionnement, dans laquelle l'aide au positionnement (21) est munie d'un contour prolongeant latéralement le contour de la surface de fixation (4b) et étant également défini à l'aide de la surface à laquelle l'élément de fixation (4) doit être fixé, et dans laquelle, par la suite, l'aide au positionnement est élaborée à partir de la partie de support (2) du support (1).

2. Procédé selon la revendication 1, **caractérisé en ce que** du côté détourné de la surface de fixation (4b), l'élément de fixation (4) est muni d'un élément de retenue (4a) non encore personnalisé et destiné à un composant (30) à retenir, dans lequel l'élément de retenue (4a) est usiné en tenant compte de l'orientation du composant (30) à retenir par rapport à la surface individuelle.

3. Procédé selon la revendication 1 ou 2, **caractérisé en ce que** la surface de fixation (4b) de l'élément de fixation (4) est réalisée en retrait par rapport au contour de l'aide au positionnement (21) d'un décalage (t) par rapport à la surface à laquelle l'élément de fixation doit être fixé.
